Europäisches Patentamt

European Patent Office

Office européen des brevets

(19)

(11) Publication number : **0 449 633 A1**

(12)

# EUROPEAN PATENT APPLICATION

(21) Application number : 91302750.4

(51) Int. Cl.⁵ : **H04N 7/16**

(22) Date of filing : 28.03.91

(30) Priority : 30.03.90 JP 86371/90

(43) Date of publication of application :
02.10.91 Bulletin 91/40

(84) Designated Contracting States :
FR GB NL

(71) Applicant : MATSUSHITA ELECTRIC
INDUSTRIAL CO., LTD.
1006, Oaza Kadoma
Kadoma-shi, Osaka-fu, 571 (JP)

(72) Inventor : Kajita, Harumasa
667-1, Endo
Fujisawa-shi, Kanagawa-ken (JP)
Inventor : Nakanami, Satoshi
422, Ueki
Kamakura-shi, Kanagawa-ken (JP)
Inventor : Kawamoto, Noriyuki
4-9-7, Kugenumakaigan
Fujisawa-shi, Kanagawa-ken (JP)

(74) Representative : Rackham, Stephen Neil et al
GILL JENNINGS & EVERY 53-64 Chancery
Lane
London WC2A 1HN (GB)

(54) Pay television.

(57)    In a pay television device of the base-band type, a horizontal sync. signal, a vertical sync. signal, and optimally the equalizing pulse group signal are removed from a composite video signal, and first-frequency and second-frequency signals for descramble processing are attached to the intervals corresponding to the removed signals. This eliminates the need for multiplexing signals with an audio signal which are necessary for descramble processing in conventional base-band type devices.

EP 0 449 633 A1

*Fig. 1*

The present invention relates to pay television systems, and more particularly to picture scramble devices and picture descramble devices employing the base-band method for use in the pay television systems.

Description of the Prior Art

Conventionally, various types of picture scramble have been employed in pay television systems in order to ensure their service or to prevent their programs from being unfairly enjoyed on the side of terminal equipment. The method of picture scramble can roughly be classified into two types, RF signal method and base-band signal method. In the RF-signal method type scramble, the amplitude of the television signal is suppressed during both of the line and field flyback periods by 6 dB or 10 dB, whereas in the base-band signal method type scramble, synchronizing signals are shifted toward the video signal and also the polarity of the video signal is inverted, for example. In addition, decoding and timing signals for a picture scramble signal are in general amplitude-modulated and multiplexed on an audio signal that is a frequency-modulated signal, for transmission.

However, such conventional methods of picture scramble are insufficient for concealment, because the methods can not fully prevent TV programs to be unfairly listened and watched, or tapped until it is threatening the profits of broadcasters. As another problem, since for release of the picture scramble a decoding signal or timing signal is amplitude-modulated to be multiplexed on an audio signal, the amplitude-modulation component may be a hindrance to the audio signal, resulting in a deteriorated sound quality.

Accordingly, the present invention has been achieved to solve the foregoing problems, and its essential object is to provide a pay television device in which picture scramble can be surely realized so as to prevent unfair viewing of television programs without deteriorating sound quality of the reproduced audio signal in the television system.

In accomplishing this and other objects, according to the present invention, there is provided a pay television device which comprises:
a picture scramble device including: sync. removing means for removing sync. signals of a composite video signal for producing sync. removed video signal; signal generating means for generating a specific signal for descramble; attaching means for attaching said specific signal in a space of said sync. removed video signal from which the synchronizing signals are already removed; shifting means for shifting the level of said sync. removed video signal and already attached by the specific signal toward the video signal side during said time space so as to produce shifted video signal; and inverting means for changing the polarity of the shifted video signal for producing picture scrambled video signal; and
a picture descramble device including: detecting means for detecting said specific signal from the picture scrambled video signal output from said picture scramble device; and descramble means for performing descramble according to a decoding information signal derived from said specific signal.

Moreover, there is provided a pay television device which comprises:
a picture scramble device including: sync. removing means for removing the horizontal sync signal, vertical sync. signal, and equalizing pulse group of a composite video signal to produce sync. removed video signal; signal generating means for generating a first specific signal having first frequency and a second specific signal having second frequency; first attaching means for attaching said first-frequency signal in a first period of a descramble timing pulse period of the sync. removed video signal within the space of the horizontal sync. signal and vertical sync. signal of said composite video signal; second attaching means for attaching said second-frequency signal in a second period of the descramble timing pulse period of the sync. removed video signal within the space of the horizontal sync. signal and vertical sync. signal of said composite video signal to produce signal attached video signal; shifting means for shifting the signal attached video signals during the intervals of the vertical synchronizing signal and equalizing pulse group out of the intervals of the line and field flyback periods of the composite video signal thereby to produce shifted video signal; and inverting means for changing the polarity of the shifted video signal in response to a scramble control data; to produce scrambled picture signal, and
a picture descramble device including: timing pulse generating means for detecting said first-frequency signal from the scrambled picture signal output from said picture scramble device to form a first timing pulse according to an internally oscillated frequency signal that is rendered phase-synchronized with the detected signal and detecting said second-frequency signal out of said scrambled picture signal to form a second timing pulse; and descramble means for forming a descramble timing pulse from said first timing pulse and performing descramble according to said first and second timing pulses and a decoding information signal obtained by decoding said descramble timing pulse.

Brief Description of the Drawings

Figure 1 is a block diagram of an embodiment of a picture scramble device according to the present invention;
Figure 2 is a block diagram of an embodiment of a picture descramble device according to the present invention; and

Figure 3 is a waveform chart of the operation of the scramble device and descramble device shown in Figures 1 and 2, respectively.

One embodiment of the present invention is described below with reference to the accompanying drawings.

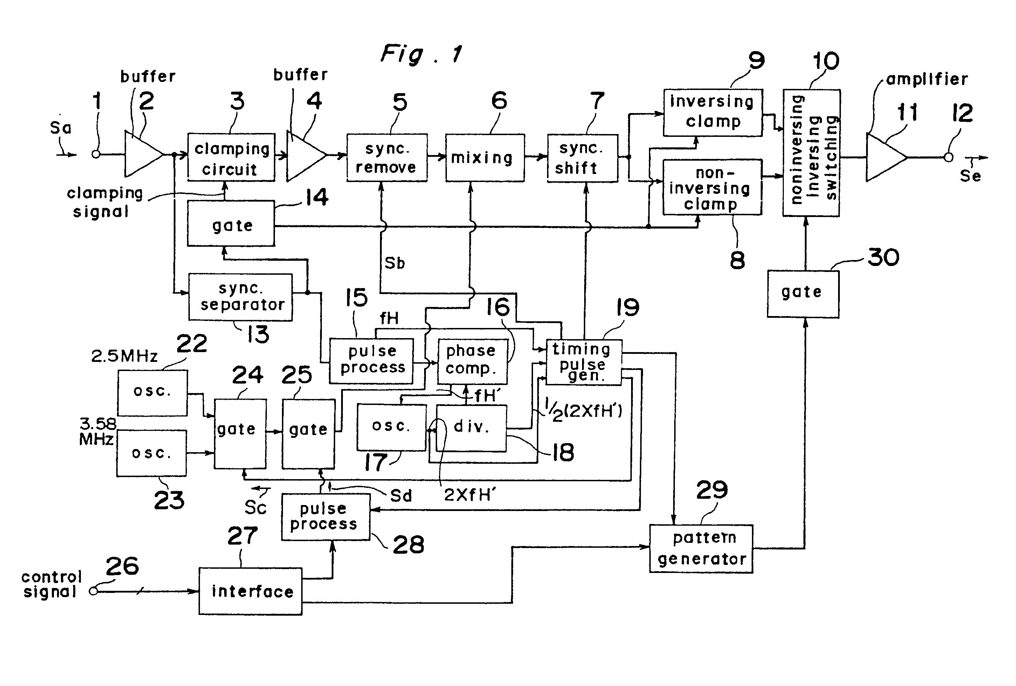

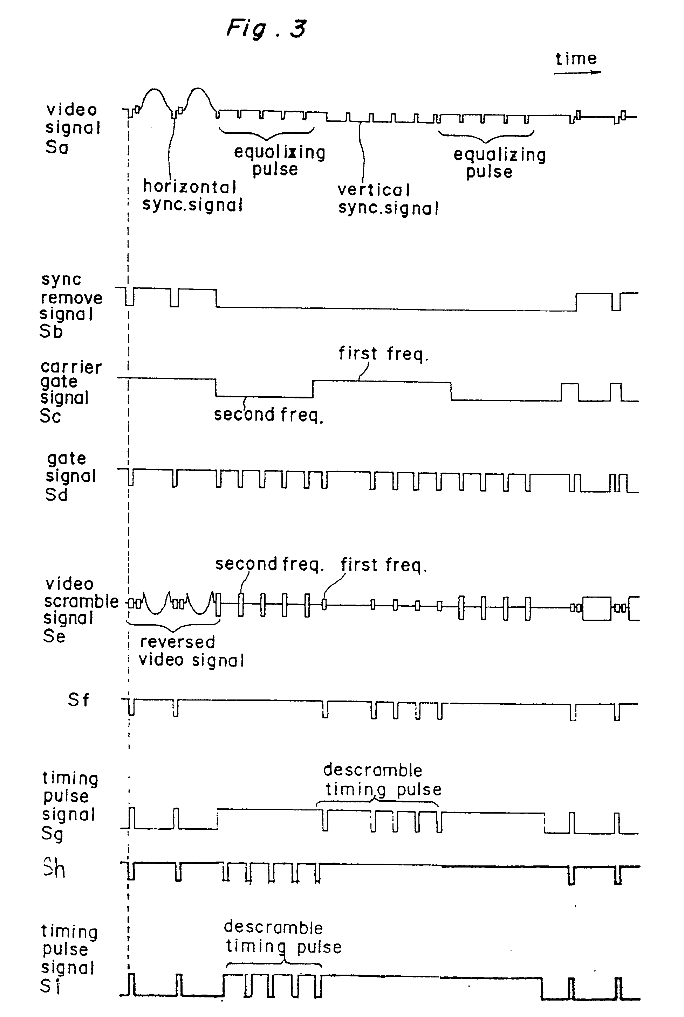

In Figure 1, a composite video signal Sa of a pay television system of NTSC system inputted from a picture input terminal 1, as shown in Figure 3, is applied to a clamping circuit 3 through a buffer amplifier 2. In the clamping circuit 3, the video signal is clamped upon application of a clamping signal applied from a gate circuit 14. The clamping signal is formed in the gate circuit 14 using a signal of the composite video signal Sa in which the various synchronizing signals are removed in a sync. separator circuit 13. The clamped video signal is entered into a sync. removing circuit 5 through a buffer amplifier 4, and in the sync. removing circuit 5 the horizontal synchronizing signal, vertical synchronizing signal, and equalizing pulse signal are removed from the composite video signal Sa upon application of the sync. removing signal Sb shown in Figure 3. The sync. removing signal Sb is formed in such a way that a pulse signal having a horizontal synchronizing frequency of $f_H$ is generated in a pulse processing circuit 15 from a synchronizing signal fed from the sync. separator circuit 13, the signal having a frequency of $f_H$ (referred to as $F_H$ pulse signal) is phase-synchronized in a phase comparator circuit 16 with an $f_{H'}$ pulse obtained by dividing the frequency of the output pulse generated by an oscillator circuit 17 having an oscillation frequency of 2 x $f_{H'}$ to one half through a frequency divider circuit 18 to form an $f_{H'}$ pulse signal, thus the sync. removing signal Sb being formed based on these $f_H$ pulse signal and $f_{H'}$ pulse signal in a timing pulse circuit 19. The sync. removed video signal from which the synchronizing signals are removed is attached by a first-frequency signal of 2.5 MHz and a second-frequency signal of 3.58 MHz in a space of the sync. removed video signal during the sync. removing period in a mixing circuit 6. The first-frequency signal is generated by a first oscillator circuit 22, while the second-frequency signal is generated by a second oscillator circuit 23, and first, in a gate circuit 24, the first-frequency signal and the second-frequency signal are switched by a carrier gate signal Sc generated in a timing pulse circuit 19, as shown in Figure 3. More specifically, in the period of time when the carrier gate signal Sc is at high level, i.e. during the intervals of the horizontal and vertical synchronizing period, the first-frequency signal is output, and during other period, the second-frequency signal is output. One of the first-frequency signal and the second-frequency signal selected in the gate circuit 24 is output to the mixing circuit 6 through a gate circuit 25 upon application of a gate signal Sd shown in Figure 3. The gate signal Sd is formed in a pulse processing circuit 28 using a pulse signal that is synchronized with the time position of the horizontal synchronizing signal formed in the timing pulse circuit 19 and a data signal that defines the period of time of the descramble pulse generated from an interface circuit 27 in response to a control signal entered into a control input terminal 26. The signal attached video signal fed from the mixing circuit 6 is shifted by 50IRE toward the video signal side during the time interval of the vertical synchronizing signal and equalizing pulse group within the line and field flyback period in the sync. shifting circuit 7. The output of the shifting circuit is so called a shifted video signal. The shifted video signal whose line flyback period is shifted as mentioned above is applied to a noninverting clamping circuit 8 and an inverting clamping circuit 9 respectively. In the former circuit 8, the shifted video signal is clamped without inverting its polarity in response to the clamping signal fed from the gate circuit 14. On the other hand, the polarity of the shifted video signal is inverted and clamped in the inverting clamping circuit 9 in response to the clamping signal fed from the gate circuit 14. Both of the noninverted clamped video signal and the inverted clamped video signal are entered into a noninverted/inverted switching circuit 10. A scramble mode signal entered as a control signal through the control input terminal 26 is inputted through the interface circuit 27 into a noninverting/inverting pattern generating circuit 29 to generate a noninverting/inverting pattern signal in response to the control input, which pattern signal is input into the noninverting/inverting switching circuit 10 through a gate circuit 30. In response to this noninverted/inverted pattern signal, one of the noninverted or inverted video signals is switchedly output from the noninverting/inverting switching circuit 10 and amplified in an amplifier circuit 11, and output to a picture output terminal 12 as a picture scramble signal Se shown in Figure 3. The picture scramble signal Se is modulated by a television modulator (not shown) and output as an RF (radio frequency) video signal.

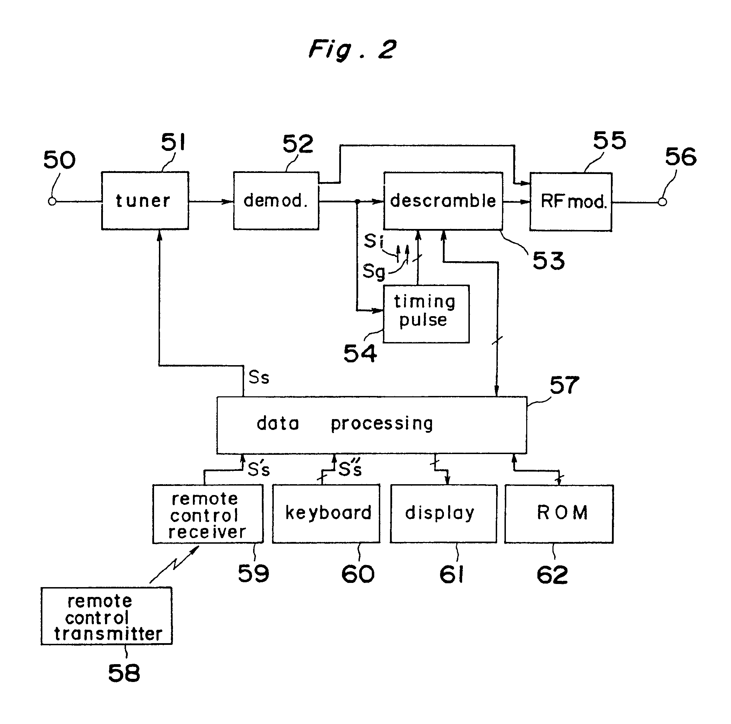

Figure 2 is a block diagram of a picture descramble device of the present invention for releasing the picture scramble signal Se.

A tuner 51 is adapted to receive various RF signals of a number of television channels and select one of the television channels selected by a user or viewer of the television system in accordance with the channel selection signal Ss provided by a data processing unit 57 which is operable by a keyboard 60 or a set of a remote control transmitter 58 and a remote control receiver 59.

The RF television signal of the selected channel is converted into an IF signal in the tuner, which is fed to a demodulator circuit 52 in which the IF signal is converted into a base-band video signal.

The demodulated video signal is inputted to a descramble circuit 53 and a timing pulse circuit 54.

The timing pulse circuit 54 detects the first-frequency signal Sf shown in Figure 3 and renders it phase-synchronized with the signal of internally generated frequency $f_H$, to form the signal of frequency $f_H$ synchronized with the demodulated video signal, thus generating a timing pulse signal Sg shown in Figure 3 from the signal of frequency $f_H$. The timing pulse signal Sg is entered into the descramble circuit 53, which extracts a descramble timing signal out of the timing pulse signal Sg, outputting it to the data processing unit 57. The data processing unit 57 decodes the descramble timing signal to output a descramble control signal to the descramble circuit 53. The descramble circuit 53 uses the timing pulse signal Sg and descramble control signal to perform shifting-restoration of the line and field flyback periods and polarity-restoration of the video signal, and further uses the timing signal Si derived from detection of the second-frequency signal Sh by the timing pulse circuit 54 to perform synchronous regeneration of the horizontal synchronizing signal, vertical synchronizing signal, and equalizing pulse signal for the picture scramble processing. Although the descrambling operation of the video signal is roughly mentioned above, since the descramble operation can be made by the reverse of the operation of the picture scramble and therefore the detailed description thereof is partially herein omitted. The video signal subjected to the descrambling processing is modulated as an RF television signal in an RF modulator 55 and output from an RF output terminal 56 so as to reproduce the video signal in a conventional television receiver (not shown). In Figure 2, reference numeral 61 denotes a display unit, and 62 a memory (ROM) in which data for descramble processing and other processing are stored.

As described above, since the picture scramble signal Se according to the present invention is formed in such a manner that sync. signals are removed and the part of the video signal in the line and field flyback periods is level-shifted, and moreover, both of the video signals with non inverted polarity and with inverted polarity, there can be provided a picture scramble signal having a highly reliable concealment property, thus it is possible to prevent illegal viewing and listening in pay Television systems. Furthermore, the first-frequency and second-frequency signals are inserted into a video signal as the descramble signals, so that it is not necessary to multiplex the descramble signals and the audio signal in the television system, thereby preventing the audio signal from being deteriorated in sound quality.

Although in this embodiment the first-frequency and second-frequency signals are set on the basis of the setting of the NTSC method, frequencies may be changed for the PAL method or others. Also, although the generation of the first-frequency and second-frequency signals are rendered free, it may be synchronized with a gate signal to control oscillation.

Claims

1. A pay television device which comprises:

a picture scramble device including: sync. removing means for removing sync. signals of a composite video signal for producing sync. removed video signal; signal generating means for generating a specific signal for descramble; attaching means for attaching said specific signal in a space of said sync. removed video signal from which the synchronizing signals are already removed; shifting means for shifting the level of said sync. removed video signal and already attached by the specific signal toward the video signal side during said time space so as to produce shifted video signal; and inverting means for changing the polarity of the shifted video signal for producing picture scrambled video signal; and

a picture descramble device including: detecting means for detecting said specific signal from the picture scrambled video signal output from said picture scramble device; and descramble means for performing descramble according to a decoding information signal derived from said specific signal.

2. A pay television device which comprises:

a picture scramble device including: a sync. removing means for removing sync. signals of a composite video signal to produce sync. removed video signal; signal generating means for generating a first specific signal and a second specific signal; first attaching means for attaching said first specific signal to a space of said sync. removed video signal; second attaching means for attaching said second specific signal to another space of said sync. removed video signal thereby producing signal attached video signal; shifting means for shifting a portion of the signal attached video signal toward the video signal during the space so as to produce shifted video signal; and inverting means for changing the polarity of the shifted video signal, thereby producing scrambled picture signal; and

a picture descramble device including timing pulse generating means for detecting said first specific signal and said second specific signal and generating a first timing signal and a second timing pulse; and descramble means for performing descramble according to a decoding information signal derived from said first and second timing pulses, thereby to produce the composite video signal.

3. A pay television device according to claim 2 wherein the frequency of the first specific signal and the second specific signal are 2.5 MHz and 3.58MHz.

4. A pay television device which comprises:

a picture scramble device including: sync. removing means for removing the horizontal sync signal, vertical sync. signal, and equalizing pulse group of a composite video signal to produce sync. removed video signal; signal generating means for generating a first specific signal having first frequency and a second specific signal having second frequency; first attaching means for attaching said first frequency signal in a first period of a descramble timing pulse period of the sync. removed video signal within the space of the horizontal sync. signal and vertical sync. signal of said composite video signal; second attaching means for attaching said second-frequency signal in a second period of the descramble timing pulse period of the sync. removed video signal within the space of the horizontal sync. signal and vertical sync. signal of said composite video signal to produce signal attached video signal; shifting means for shifting the signal attached video signals during the intervals of the vertical synchronizing signal and equalizing pulse group out of the intervals of the line and field flyback periods of the composite video signal thereby to produce shifted video signal; and inverting means for changing the polarity .of the shifted video signal in response to a scramble control data; to produce scrambled picture signal, and

a picture descramble device including: timing pulse generating means for detecting said first-frequency signal from the scrambled picture signal output from said picture scramble device to form a first timing pulse according to an internally oscillated frequency signal that is rendered phase-synchronized with the detected signal and detecting said second-frequency signal out of said scrambled picture signal to form a second timing pulse; and descramble means for forming a descramble timing pulse from said first timing pulse and performing descramble according to said first and second timing pulses and a decoding information signal obtained by decoding said descramble timing pulse.

5. A pay television device according to claim 4 wherein the frequency of the first specific signal and the second specific signal are 2.5 MHz and 3.58MHz.

6. A pay television device which comprises:

a picture scramble device including: sync. removing means for removing sync. signals of a composite video signal for producing sync. removed video signal; signal generating means for generating a specific signal for descramble; attaching means for attaching said specific signal in a space of said sync. removed video signal from which the synchronizing signals are already removed; shifting means for shifting the level of said sync. removed video signal and already attached by the specific signal toward the video signal side during said time space so as to produce shifted video signal; and inverting means for changing the polarity of the shifted video signal for producing picture scrambled video signal.

7. A pay television device which comprises:

a picture descramble device including: detecting means for detecting said specific signal from the picture scrambled video signal output from said picture scramble device; and descramble means for performing descramble according to a decoding information signal derived from said specific signal.

Fig. 1

Fig. 2

tuner 51

demod. 52

descramble 53

RF mod. 55

timing pulse 54

data processing 57

ROM 62

display 61

keyboard 60

remote control receiver 59

remote control transmitter 58

50

56

Si  Sg

Ss  S's  S''s

## Fig . 3

time

video
signal
Sa

equalizing
pulse

equalizing
pulse

horizontal
sync.signal

vertical
sync.signal

sync
remove
signal
Sb

carrier
gate
signal
Sc

first freq.

second freq.

gate
signal
Sd

second freq.    first freq.

video
scramble
signal
Se

reversed
video signal

Sf

timing
pulse
signal
Sg

descramble
timing pulse

Sh

timing
pulse
signal
Si

descramble
timing pulse

European Patent Office

**EUROPEAN SEARCH REPORT**

Application Number

| | DOCUMENTS CONSIDERED TO BE RELEVANT | | EP 91302750.4 |
|---|---|---|---|
| Category | Citation of document with indication, where appropriate, of relevant passages | Relevant to claim | CLASSIFICATION OF THE APPLICATION (Int. Cl.5) |
| X | <u>EP - A1 - 0 119 751</u> (SANYO) <br> * Abstract; fig. 5,7; claims 1-10 * <br> -- | 1,2,4, 6,7 | H 04 N 7/16 |
| A | <u>GB - A - 2 078 051</u> (OAK INDUSTRIES) <br> * Abstract; fig. 1-8; claims 1-10 * <br> -- | 1,2,4, 6,7 | |
| A | <u>US - A - 4 527 195</u> (CHEUNG) <br> * Abstract; fig. 1,2; claims 1,2 * <br> ---- | 1,2,4, 6,7 | |
| | | | **TECHNICAL FIELDS SEARCHED (Int. Cl.5)** <br><br> H 04 N 7/00 |

The present search report has been drawn up for all claims

| Place of search | Date of completion of the search | Examiner |
|---|---|---|
| VIENNA | 03-07-1991 | BENISCHKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)